Europäisches Patentamt

European Patent Office

Office européen des brevets

(19)

(11) Numéro de publication: **0 165 899**
**A2**

(12) **DEMANDE DE BREVET EUROPEEN**

(21) Numéro de dépôt: **85810240.3**

(22) Date de dépôt: **22.05.85**

(51) Int. Cl.⁴: **G 01 K 17/00**
**G 05 D 23/19, F 24 D 19/10**

(30) Priorité: **22.05.84 CH 2508/84**

(43) Date de publication de la demande:
**27.12.85 Bulletin 85/52**

(84) Etats contractants désignés:
**CH DE FR GB LI NL SE**

(71) Demandeur: **PANENSA Société Anonyme**
**Les Vernets**
**CH-2035 Corcelles/Ne(CH)**

(72) Inventeur: **Daenzer, Pierre**
**Saars 21**
**CH-2000 Neuchâtel(CH)**

(74) Mandataire: **Kerr, Andrew**
**Postfach 122 Finkelerweg 44**
**CH-4144 Arlesheim BL(CH)**

(54) **Appareil permettant de relever la signature énergétique d'un bâtiment.**

(57) Cet appareil permet de fournir facilement un diagnostic sur le comportement thermique d'un bâtiment en déterminant le taux d'activité Px de l'installation de chauffage 3 pendant une série de périodes successives de fonctionnement de cette installation. Ce taux d'activité Px est calculé chaque fois (circuit de calcul 7) en établissant le rapport entre l'état d'activité et l'état d'inactivité de l'installation. La signature énergétique peut alors être établie en traçant le taux d'activité Px en fonction de la température extérieure Te en tenant compte directement du fonctionnement de l'installation de chauffage. en outre, il peut être tenu compte de l'ensoleillement (capteurs 13) et de la force du vent (dispositif manométrique différentiel 12) pour relever une signature énergétique multiple composée de courbes tracées pour des conditions d'ensoleillement et de force du vent prédéterminées. Un microprocesseur 16 permet de soumettre toutes les valeurs mesurées à un calcul statistique.

./...

Fig 3

APPAREIL PERMETTANT DE RELEVER LA

SIGNATURE ENERGETIQUE D'UN BATIMENT

La présente invention est relative à l'étude du comportement thermique des bâtiments en vue notamment d'optimaliser les installations de chauffage qui les équipent et d'en étudier l'isolation thermique.

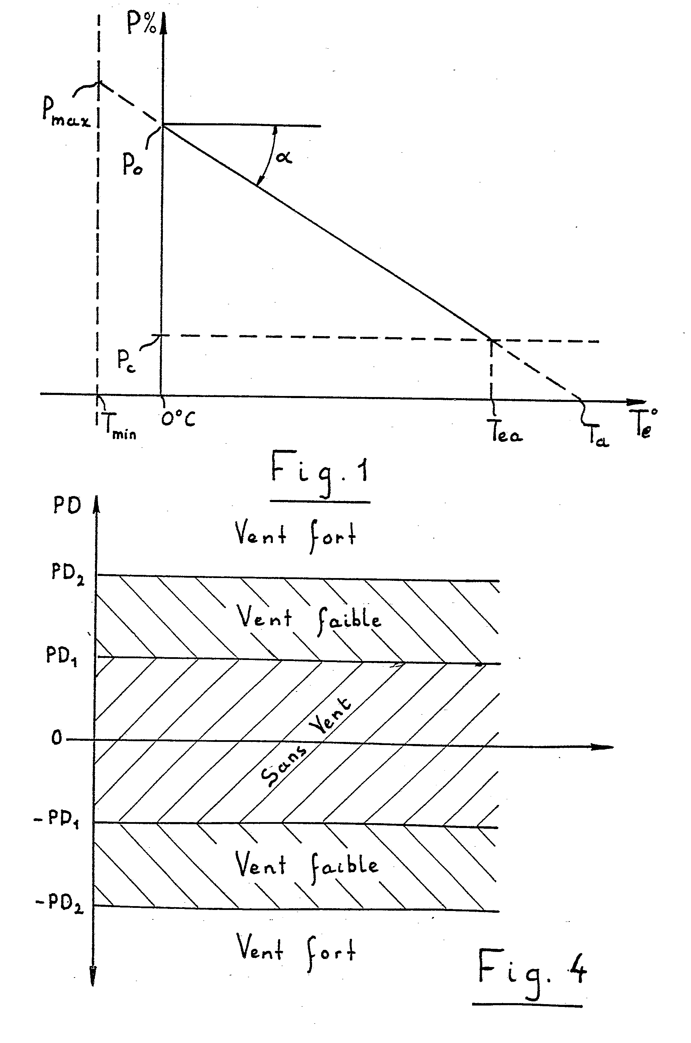

Pour caractériser le comportement thermique d'un bâtiment, on utilise actuellement une représentation graphique appelée "signature énergétique" du bâtiment. La Fig. 1 des dessins annexés représente un exemple d'une telle "signature".

On voit qu'il s'agit d'une relation que l'on suppose linéaire d'une grandeur représentant les taux d'activité $P$ de l'installation de chauffage en fonction de la température extérieure $Te$. On entend par taux d'activité pendant une période de temps donnée, le rapport entre le temps pendant lequel l'installation fonctionne et le temps pendant lequel celle-ci ne fonctionne pas, ce rapport pouvant être exprimé en pourcentages, par exemple.

Ainsi, à chaque température extérieure $Te$ correspondra une valeur du taux d'activité $P$,ce dont les spécialistes peuvent tirer un certain nombre de conclusions concernant l'aptitude de l'installation à chauffer convenablement et avec le meilleur rendement le bâtiment en question.

On remarquera, à l'examen de la Fig. 1, que la courbe ainsi obtenue présente plusieurs points remarquables qui sont les suivants:

$Po$ : taux d'activité constaté à la température $0^{\circ}$;

$Pc$ : taux d'activité nécessaire pour le chauffage de l'eau sanitaire, lorsque la température extérieure atteint une valeur $Tea$ au dessus de laquelle il est inutile de chauffer encore le bâtiment ;

Pmax : taux d'activité (généralement extrapolé à partir de la courbe) pour la température minimale Tmin pouvant se présenter;

Ta : température théorique à laquelle le taux d'activité P est égal à zéro ;

$\alpha$ : pente de la courbe.

Pour obtenir la signature énergétique ainsi définie, il existe des appareils qui effectuent une mesure du taux d'activité P et de la température extérieure Te à des intervalles réguliers d'une heure, par exemple. Bien que ces appareils puissent ainsi fournir une représentation graphique du comportement énergétique du bâtiment, il faut constater qu'ils ne donnent pas une image fidèle de la réalité. En effet, si les mesures sont espacées d'un intervalle régulier, celui-ci est totalement arbitraire vis-à-vis du comportement de l'installation de chauffage. En particulier, il peut très bien arriver qu'une période d'activité de celle-ci chevauche deux périodes de mesure consécutives, si bien qu'une partie, au moins, de la période d'activité de l'installation n'est pas prise en compte. En outre, au cas où survient un brusque saut de température entre deux mesures, celui-ci n'est pas incorporé dans le relevé. Si, enfin, les périodes de mesure ont une durée d'une heure, on n'obtient que 24 mesures par jour, ce qui est statistiquement insuffisant. En rendant les mesures plus fréquentes, ce dernier facteur est naturellement amélioré, mais il reste que les instants de mesure seront toujours arbitrairement choisis vis-à-vis de l'activité réelle de l'installation de chauffage.

L'invention a pour but de fournir un appareil du type susindiqué, qui soit apte à donner une image plus fidèle du comportament énergétique d'un bâtiment, rendant ainsi la signature énergétique plus efficace pour l'établissement d'un diagnostic de ce comportement.

L'invention a donc pour objet un appareil pour relever la signature énergétique d'un bâtiment équipé d'une installation de chauffage dont le fonctionnement est intermittent par régulation thermique, cet appareil comportant

- des moyens destinés à fournir un signal représentatif de la température extérieure au bâtiment;
- des moyens pour fournir un signal représentatif des états d'activité et d'inactivité de l'installation de chauffage;
- des moyens qui, en fonction dudit signal d'activité, établissent un signal de taux d'activité, pendant une série de périodes successives composant une durée durant laquelle la signature est relevée; et
- des moyens pour établir une représentation graphique dudit signal de taux d'activité en fonction dudit signal représentant la température extérieure, cette représentation formant ladite signature,

ledit appareil étant caractérisé en ce que

- lesdits moyens d'établissement du taux d'activité sont agencés pour déterminer le taux d'activité sur des périodes de temps s'étendant entre le début d'un état d'activité de l'installation de chauffage et le début de l'état d'activité suivant.

Il résulte de ces caractéristiques que la courbe graphique de la signature est formée par des points qui tiennent directement compte des conditions réelles de fonctionnement de l'installation de chauffage, conditions qui ne dépendent pas de l'heure du jour mais des besoins énergétiques relevés par le dispositif de régulation de l'installation. La signature traduit ainsi de très près la réalité et le diagnostic du spécialiste peut être plus exact.

Un autre inconvénient des appareils de l'art antérieur résidait dans le fait que les apports d'énergie autres que ceux de l'installation de chauffage et, par ailleurs, les déperditions de d'énergie n'étaient pas pris    en compte pour le relevé de la signature. Cet inconvénient, auquel il est partiellement remédié grâce aux caractéristiques qui viennent d'être énoncées, peut pratiquement être éliminé, si suivant une autre caractéristique de l'invention, l'appareil comporte des moyens pour produire un signal représentant l'ensoleillement à l'emplacement du bâtiment et des moyens pour conférer à ladite signature une forme tenant compte du paramètre de l'ensoleillement.

En outre, il peut être prévu, selon une autre caractéristique, des moyens pour fournir un signal représentant la force du vent auquel est exposé le bâtiment et des moyens pour conférer à ladite signature une forme tenant compte du paramètre de la force du vent.

L'invention sera mieux comprise à la lecture de la description qui va suivre d'un exemple de réalisation, description qui est faite en faisant référence aux dessins annexés sur lesquels:
- la Fig.1 est une représentation graphique correspondant à une signature énergétique d'un bâtiment;
- la Fig.2 montre un diagramme temporel de l'état d'activité/inactivité d'une installation de chauffage et la façon d'utiliser ce diagramme dans l'appareil suivant l'invention;
- la Fig.3 est un schéma simplifié de cet appareil; et
- la Fig.4 montre un diagramme illustrant la façon de prendre en compte la force du vent dans l'établissement de la signature énergétique.

Le diagramme de la Fig.2 montre un certain nombre de cycles d'états d'activité/inactivité de l'installation de chauffage qui équipe le bâtiment à étudier. On suppose que cette installation est pourvue elle-même d'un dispositif de régulation classique permettant de la mettre en marche et de l'arrêter en fonction de l'évolution de la température régnant dans l'un des locaux du bâtiment, par exemple.

Il est à noter que la Fig.2 ne représente pas un exemple réel, la forme du diagramme n'étant choisie que pour expliciter l'invention.

Selon l'invention, l'appareil permet de calculer le paramètre Px en établissant, durant chaque cycle activité/inactivité X1 à Xn, le rapport entre la durée respective de l'activité x1 à xn et la durée de ce cycle. En d'autres termes, on calcule chaque fois Px = x/X, Px étant appelé taux d'activité que l'on peut exprimer en pourcentage, par exemple.

On conçoit que la durée tant des intervalles d'activité que des cycles varie considérablement en fonction du temps, la variation pouvant être influencée par de nombreux facteurs, tels que les conditions météorologiques, la fréquence des entrées et des sorties, le genre d'occupation des locaux, la qualité de l'isolation thermique, etc. Cependant, grâce à l'invention, ces conditions sont prises en compte dans le calcul du paramètre Px, car c'est, en définitive, l'activité de l'installation de chauffage qui traduit les besoins en énergie du bâtiment.

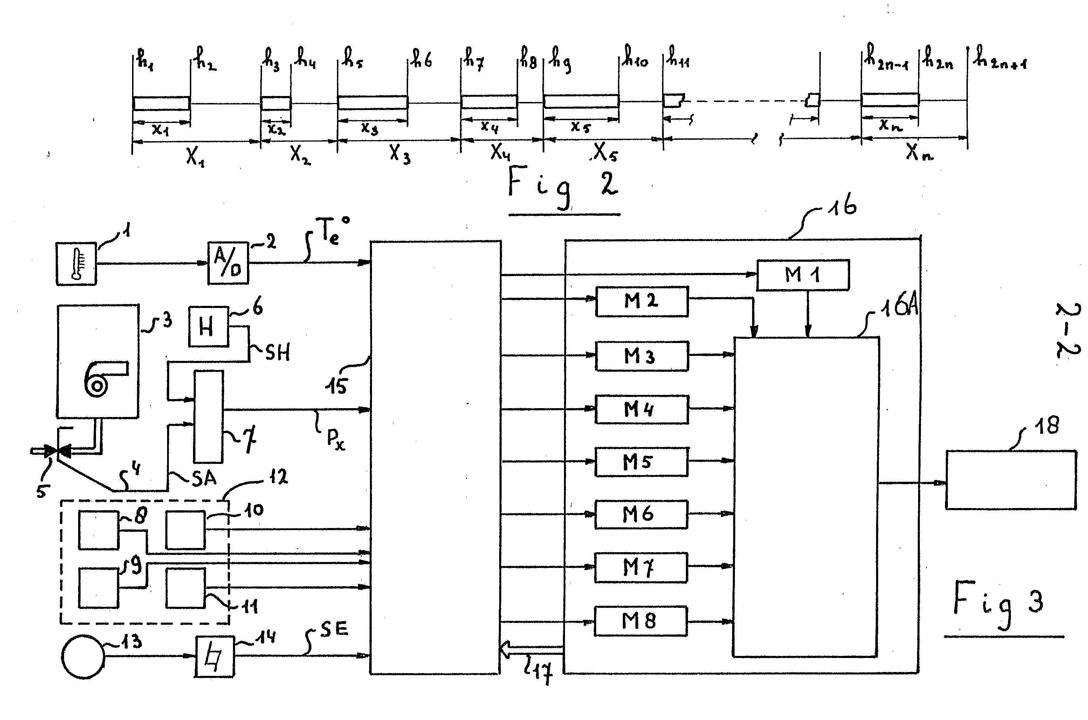

Conformément au schéma de la Fig.3, l'appareil selon l'invention comporte une sonde 1 de la température extérieure qui, par l'intermédiaire d'un convertisseur analogique/numérique 2, fournit un signal numérique Te représentant la température extérieure.

L'installation de chauffage du bâtiment, symbolisée par le rectangle 3, fournit un signal d'activité SA sur la ligne 4.

La construction de l'installation de chauffage elle-même est indifférente vis-à-vis de l'invention, mais il est essentiel que le signal SA témoigne de ses états alternés d'activité et d'inactivité. Ce signal peut donc être un signal logique prélevé, par exemple, sur la vanne 5 d'alimentation en combustible de la chaudière, si l'installation fonctionne avec du fuel domestique. Bien entendu, comme cela est classique, le fonctionnement de l'installation est piloté par un dispositif de régulation (non représenté) équipé d'un thermostat installé dans l'une des pièces du bâtiment, par exemple.

Une horloge 6 fournit un signal horaire SH basé sur l'heure normale, afin de permettre le calcul du paramètre Px. A cet effet, il est prévu un circuit 7 de calcul de rapport qui, en fonction du niveau du signal SA, enregistre les instants de transition h1 à h2n+1 (Fig.2) entre les états d'activité et les états d'inactivité de l'installation. Ainsi, au moment où l'installation de chauffage recommence à fonctionner, au début du cycle X2 (Fig.2), le circuit de calcul 7 établit, pour le cycle précédent X1, le rapport:

$$\frac{h2 - h1}{h3 - h1} = P1$$

Un calcul analogue est donc effectué sur le cycle précédent dès qu'un cycle suivant commence et ce pendant toute la durée de relevé de la signature.

Un signal numérique représentant le paramètre Px apparait donc à des intervalles de temps successifs à la sortie du circuit de calcul 7, avec Px $=\dfrac{hx+1 - hx}{hx+2 - hx}$.

L'appareil suivant l'invention comporte également un certain nombre de manocontacts différentiels, ici quatre indiqués par les références 8 à 11. Ces manocontacts font partie d'un dispositif manométrique différentiel 12 destiné à mesurer la force du vent. Ce dispositif, qui est connu en soi, comporte un tube placé près d'une fenêtre, par exemple, exposée aux vents dominants. Deux capsules manométriques captent la pression aux deux extrémités du tube et les valeurs de pression sont combinées pour fournir une pression différentielle capable d'agir sur les quatre manocontacts 8 à 11, tous ajustés sur une valeur de pression différente. C'est ce qu'illustre la Fig.4 qui montre que, pour les pressions différentielles PD1 et -PD1, les manocontacts 8 et 9 réagissent pour fournir un signal indiquant que les conditions météorologiques passent d'un état sans vent à un état avec vent faible. Lorsque les pressions PD2 ou -PD2 sont franchies, on est en présence de vents forts. L es manocontacts 10 et 11 provoquent alors une interruption de la mesure. En effet, dans ces conditions, on estime que celle-ci n'est plus significative. Bien entendu, la Fig.4 ne montre qu'un exemple de prise en compte de la force du vent, celle-ci pouvant être mesurée avec plus de finesse, voire analogiquement, si on le souhaite. Cependant, dans le présent exemple de réalisation, l'évaluation de la force du vent en quatre paliers est suffisante.

En revenant à la Fig.3, on voit que l'appareil comporte également un capteur solaire 13 qui est raccordé à un convertisseur 14 transformant le signal analogique du capteur en un signal par tout ou rien en fonction d'un seuil d'ensoleillement. En d'autres termes, le convertisseur 14 fournit un signal d'ensoleillement SE dont on tiendra compte lors du relevé de la signature. Bien entendu, ici également, la mesure peut être affinée au besoin, si cette signature doit être évaluée de façon plus précise en fonction du rayonnement solaire.

Toutes les données ainsi mesurées sont appliquées à un interface logique d'aiguillage 15 qui les applique selon une répartition appropriée à un micro-processeur 16, celui-ci étant utilisé également pour commander les circuits de l'interface via la ligne 17.

Le micro-processeur 16 peut être d'un type classique disponible dans le commerce et programmé convenablement. Tant la réalisation de l'interface 15 que la programmation de ce micro-processeur 16 doivent être considérées comme étant à la portée des spécialistes et elles ne nécessitent donc pas une description détaillée ici.

Cependant, il convient de noter que la mémoire du microprocesseur est répartie par programmation en plusieurs zones

M1 à M8 qui sont destinées à recevoir les données transmises par l'interface 15. Ainsi, les zones de mémoires M2 à M7 sont utilisées selon le tableau ci-dessous.

TABLEAU

| Zone de mémoire | Jour/Nuit | Soleil | Vent |
|---|---|---|---|
| 2 | jour | non | non |
| 3 | jour | non | oui |
| 4 | jour | oui | oui |
| 5 | jour | oui | non |
| 6 | nuit | – | non |
| 7 | nuit | – | oui |

La zone de mémoire M1 enregistre successivement toutes les valeurs de température extérieure Te et de Px indépendemment de l'ensoleillement et du vent. La zone de mémoire M8 est destinée à recevoir les données de Px lorsque Te est supérieure à 20°C. Le chauffage est alors arrêté, mais l'installation de chauffage continue à fonctionner pour assurer l'alimentation en eau chaude sanitaire.

Quant aux zones de mémoire M2 à M7, celles-ci n'enregistrent que les données qui leur sont spécifiquement destinées selon les conditions du tableau ci-dessus, l'interface 15 assurant l'aiguillage approprié des données sous la commande du micro-processeur 16.

Ainsi, à la fin d'une mesure qui peut s'étendre sur plusieurs jours, voire plusieurs semaines, le micro-processeur 16 contient les données permettant de relever la signature énergétique qui, dans le présent exemple, est composée de plusieurs courbes du type de la.Fig.1, le contenu de chacune des zones de mémoire M2 à M7 donnant lieu au calcul d'une courbe particulière.

En effet, le micro-processeur peut être programmé selon un programme bien connu pour, à partir des points relevés de chaque courbe, calculer sa pente et son origine Po. Il suffit, à cet effet, d'avoir recours à la méthode statistique des moindres carrés, mise en oeuvre en calculant les valeurs suivantes: $\Sigma$ Te, $\Sigma$ Px, $\Sigma$ Te$^2$, $\Sigma$ Px$^2$, $\Sigma$ Te Px. De même, on peut facilement obtenir la droite de corrélation ainsi que le coefficient de corrélation des points relevés. Tous ces calculs sont effectués dans le micro-processeur et symbolisés par le rectangle 16A. Les résultats, c'est-à-dire le tracé des courbes de signature, peuvent éventuellement être affichés à l'aide d'un traceur de courbes 18, par exemple. Bien entendu, on peut extraire des données fournies au micro-processeur d'autres paramètres importants tels que Te max, Te min et d'autres valeurs statistiques intéressantes.

On constate donc que l'invention fournit un appareil permettant d'obtenir une signature énergétique conposée de plusieurs courbes caractéristiques qui tiennent compte de diverses conditions météorologiques et surtout du comportement réel de l'installation de chauffage du bâtiment.

# REVENDICATIONS

1. Appareil pour relever la signature énergétique d'un bâtiment équipé d'une installation de chauffage dont le fonctionnement est intermittent par régulation thermique, cet appareil comportant:

- des moyens (1,2) destinés à fournir un signal représentatif de la température extérieure (Te) au bâtiment;
- des moyens (4,5) pour fournir un signal représentatif des états d'activité et d'inactivité de l'installation de chauffage;
- des moyens (6,7) qui, en fonction dudit signal d'activité, établissent un signal de taux d'activité (Px), pendant une série de périodes successives (X1 à Xn) composant une durée durant laquelle la signature est relevée; et
- des moyens (15,16) pour établir une représentation graphique dudit signal de taux d'activité (Px) en fonction dudit signal (Te) représentant la température extérieure, cette présentation formant ladite signature.

ledit appareil étant caractérisé en ce que

- lesdits moyens (6,7) d'établissement du taux d'activité (Px) sont agencés pour déterminer le taux d'activité sur des périodes de temps (X1 à Xn) s'étendant entre le début d'un état d'activité de l'installation de chauffage et le début de l'état d'activité suivant.

2. Appareil suivant la revendication 1, caractérisé en ce qu'il comporte des moyens (13,14) pour produire un signal représentant l'ensoleillement (SE) à l'emplacement du bâtiment et des moyens (15 à 18; M1 à M8) pour conférer à ladite signature une forme tenant compte du paramètre de l'ensoleillement.

3. Appareil suivant l'une quelconque des revendications 1 et 2, caractérisé en ce qu'il comporte, en outre, des moyens (8 à 11) pour fournir un signal représentant la force du vent auquel est exposé le bâtiment et des moyens (15 à 18; M1 à M8) pour conférer à ladite signature une forme tenant compte de la force du vent.

11                                              **0165899**

4. Appareil suivant les revendications 2 et 3, caractérisé en ce que ladite signature énergétique est composée de
plusieurs courbes représentant le taux d'activité (Px) en
fonction de la température extérieure (Te), chaque courbe
étant relevée pour des conditions d'ensoleillement et/ou de
force du vent prédéterminées.

5. Appareil suivant la revendication 4, caractérisé en
ce qu'il comporte plusieurs mémoires (M1 à M8) pour enregistrer, au cours du relevé de la signature, toutes les valeurs
de taux d'activité (Px) et de température extérieure (Te) et
des moyens (16, 16A) pour soumettre ces valeurs à un calcul
statistique permettant de dresser les courbes de la signature
énergétique.

6. Appareil suivant l'une quelconque des revendications
précédentes, caractérisé en ce que lesdits moyens établissant
le taux d'activité (Px) comprennent un dispositif de calcul
(7) connecté à une horloge (6) et aux dits moyens (3,4,5)
fournissant le signal (SA) représentant les états d'activité/
inactivité de ladite installation de chauffage (3), ledit
dispositif de calcul(7) étant agencé pour, à l'issue de chaque
état d'inactivité, calculer le taux d'activité en fonction
des instants de transition relevés selon la relation:

$$Px = \frac{hx+1 - hx}{hx+2 - hx}$$

avec:

Px: taux d'activité au cours d'une période d'activité/
inactivité ($X_1$ à $X_n$)

hx: instant de transition relevé fourni par l'horloge(6).

7. Appareil suivant l'une quelconque des revendications
3 à 6, caractérisé en ce que lesdits moyens (8 à 11) pour
fournir un signal représentant la force du vent comprennent
un dispositif de mesure différentielle de la force du vent
(12), pourvu de plusieurs manocontacts (8 à 11) réagissant
chacun à une pression différentielle prédéterminée (PD1,PD2,

-PD1, -PD2) pour établir plusieurs classes de force de vent pour lesquelles les courbes du taux d'activité (Px) en fonction de la température extérieure (Te) sont établies.

Fig.1

Fig.4

Fig 2

Fig 3